(19) Europäisches Patentamt
European Patent Office
Office européen des brevets

(11) **EP 2 247 868 B1**

(12) **EUROPÄISCHE PATENTSCHRIFT**

(45) Veröffentlichungstag und Bekanntmachung des Hinweises auf die Patenterteilung:
**25.04.2012 Patentblatt 2012/17**

(21) Anmeldenummer: **09702853.4**

(22) Anmeldetag: **08.01.2009**

(51) Int Cl.:
*F16D 65/18* (2006.01)       *F16D 65/56* (2006.01)

(86) Internationale Anmeldenummer:
**PCT/EP2009/000055**

(87) Internationale Veröffentlichungsnummer:
**WO 2009/090011 (23.07.2009 Gazette 2009/30)**

(54) **PNEUMATISCH BETÄTIGTE SCHEIBENBREMSE MIT BETÄTIGUNGSSTÖSSEL**

PNEUMATICALLY ACTUATED DISK BRAKE WITH ACTUATION TAPPET

FREIN À DISQUE À ACTIONNEMENT PNEUMATIQUE AVEC POUSSOIR D'ACTIONNEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **17.01.2008 DE 102008004806**

(43) Veröffentlichungstag der Anmeldung:
**10.11.2010 Patentblatt 2010/45**

(73) Patentinhaber: **KNORR-BREMSE Systeme für Nutzfahrzeuge GmbH 80809 München (DE)**

(72) Erfinder:
• **PERICEVIC, Aleksandar**
  **80636 München (DE)**
• **BAUMGARTNER, Johann**
  **85368 Moosburg (DE)**
• **GRUBER, Robert**
  **83539 Pfaffing (DE)**
• **TRIMPE, Robert**
  **82234 Wessling (DE)**
• **SAUTER, Walter**
  **93138 Lappersdorf-Lorenzen (DE)**

(74) Vertreter: **Mattusch, Gundula Knorr-Bremse AG, Patentabteilung V/RG Moosacher Strasse 80 80809 München (DE)**

(56) Entgegenhaltungen:
EP-A- 0 688 404          WO-A-2007/112881
DE-A1- 10 335 402        DE-B- 1 131 531
DE-B3-102006 036 278

**Beschreibung**

Die Erfindung betrifft eine pneumatisch betätigte Schiebesattel-Scheibenbremse nach dem Oberbegriff des Anspruchs 1.

Aus der DE 1 131 531 A ist eine selbstverstärkende Scheibenbremse bekannt, welche als Zuspannvorrichtung einen direkt in den Sattel integrierten Zylinder aufweist, in dem ein Kolben verschieblich geführt ist, der zur Zuspannung hydraulisch oder pneumatisch mit einem Druck beaufschlagt wird. Der Kolben wirkt direkt auf ein am Kolben verschwenkbar gelagertes Druckstück, welches wiederum direkt auf einen zuspannseitigen Bremsbelag wirkt, der auch in Umfangsrichtung der Bremsscheibe verschieblich ist. Es handelt sich um eine Festsattelscheibenbremse mit einer verschieblichen Bremsscheibe. Aufgrund der Dimensionierung des Zylinders und der Ausführung der Mechanik ist diese Scheibenbremse nicht für den Serieneinsatz auch bei Nutzfahrzeugen geeignet.

Die DE 103 35 402 A1 zeigt eine elektromechanische betätigbare Scheibenbremse in selbstverstärkender Bauart.

Auch gattungsgemäße pneumatisch betätigte Scheibenbremsen sind an sich bekannt, so aus der DE 40 32 885 A1 oder der der WO 97/22 814. Es ist wünschenswert, den Platzbedarf und das Gewicht derartiger Schiebesattel-Scheibenbremsen und insbesondere den Bauraumbedarf des zugehörigen Aktuators - dem Bremszylinder - zu verringern. Die Bremse soll jedoch die Betriebseigenschaften der druckluftbetätigten Bremse aufweisen, so das sicher selbsttätige Lösen und die exakte Dosierbarkeit der Bremswirkung. Ebenso sollen die Einfachheit und Robustheit sowie die niedrigen Herstellkosten der druckluftbetätigten Scheibenbremse beibehalten werden.

DE-B-10 2006 036 278 zeigt eine Bremse gemäß dem Oberbegriff des Anspruchs 1.

Im Nutzfahrzeugbereich ist es auf Grund der hohen wirksamen Kräfte für erforderlich gehalten worden, neben einer Mutter-Spindel-Übersetzung in der Zuspannvorrichtung eine weitere Übersetzung zu implementieren, um bei im Vergleich zum PKW hohen Zuspannkräften immer noch möglichst klein bauen zu können. Diese zusätzliche Übersetzung kann beispielsweise über eine Hebelmechanik dargestellt werden.

Die Notwendigkeit zu einem möglichst kleinen Bauraum ist beim Nutzfahrzeug deshalb vorhanden, da durch die üblichen Starrachs- und Fahrgestellkonstruktionen nach dem Leiterrahmenprinzip der Bauraum im Bereich der Räder und Felgen bei Nutzfahrzeugen bauartbedingt insbesondere für den Bremskrafterzeuger ausgesprochen beengt ist.

Ausgehend von den oben geschilderten Rahmenbedingungen sieht sich ein Fachmann vor der Aufgabe, eine möglichst kleinbauende Scheibenbremse zu entwickeln, die außerdem stabile Regelungseigenschaften für die im Nutzfahrzeug mittlerweile standardmäßig verbauten elektronischen Bremssysteme (ABS, EBS etc.) zur Verfügung stellt und darüber hinaus über eine hohe Marktakzeptanz verfügt.

Dabei ist insbesondere der Zielkonflikt zwischen kleiner Bauform und den zur Verfügung stehender konstruktiven Mittel zum Erreichen dieses Ziels wie z.B. der Implementierung einer Selbstverstärkungseinrichtung im Zusammenspiel mit einer guten Regelbarkeit im Zusammenhang mit elektronischen Bremsanlagen und hier insbesondere das für eine einwandfreie Anti-Blockier-Funktion erforderliche sichere und schnelle Abbauen der Bremskraft zu lösen.

Die Lösung dieses Problems ist die Aufgabe der Erfindung.

Die Erfindung löst diese Aufgabe durch den Gegenstand des Anspruchs 1.

Bei Trommelbremsen ist die Nutzung der Selbstverstärkung systembedingt gegeben. Auch druckluftbetätigte Trommelbremsen für schwere Nutzfahrzeuge verfügen über Selbstverstärkung welche jedoch je nach Bauart unterschiedlich stark genutzt wird.

Bei spreizkeilbetätigten Duo-Duplex-Trommelbremsen wird ein hoher Grad der Selbstverstärkung realisiert. Derartige Bremsen waren als druckluftbetätigte Bremsen in schweren Nutzfahrzeugen im Einsatz, fanden jedoch keine weitere Verbreitung da die hohe Selbstverstärkung neben einer begrenzten Stufbarkeit ungleiche Bremswirkung sowie ungleiches Verschleißverhalten zur Folge hatte.

Simplex Trommelbremsen mit S-Nocken Betätigung waren bis zur Einführung der druckluftbetätigten Scheibenbremse nahezu die alleinige Bremsenausrüstung für schwere Nutzfahrzeuge. Der besonderer Vorteil dieser Trommelbremsen-Bauart besteht darin, dass infolge der festen Zuspannung mittels S-Nocke die Auswirkungen der Selbstverstärkung gemildert und vor allem der Verschleiß von auflaufender und ablaufender Bremsbacke innerhalb einer Bremse vergleichmäßigt wird. Dennoch gibt es auch bei S-Nocken Bremsen noch relativ starke Bremskraftunterschiede verbunden mit ungleicher Bremswirkung und einem wenig komfortablen Ansprechverhalten der Bremse.

In Westeuropa wurden die S-Nocken Trommelbremsen weitgehend durch druckluftbetätigte Scheibenbremsen abgelöst, wobei deren besonderer Vorzug an sich darin gesehen wird, dass bei ihnen gerade nicht ein Selbstverstärkungseffekt mit den damit verbundenen Nachteilen gegeben ist.

Grundsätzlich anders sieht die Lage bei elektromotorisch betätigten Scheibenbremsen aus, wo es von Interesse ist, durch den Einsatz der Selbstverstärkung zu versuchen, den ansonsten sehr hohen elektrischen Energiebedarf dieser Bremsenbauart zu reduzieren. Zudem können elektromotorisch betätigte Bremsen positionsgesteuert betrieben werden, wodurch die Auswirkungen der Selbstverstärkung auf das Betriebsverhalten der Bremse eher beherrschbar bleiben (siehe beispielsweise die DE 101 56 348, die DE 101 39 913.8 oder die DE 10 2005 030 618.7 und die DE 10 2006 036 279.9 oder die WO 2007/082658).

Bei druckluftbetätigten Scheibenbremsen wurde aufgrund der Erfahrungen mit selbstverstärkenden Trommelbremsen die Nutzung der Selbstverstärkung gerade nicht angestrebt, da die Bereitstellung der Betätigungsenergie an sich kein nennenswertes Problem darstellt. Von diesem Trend wendet sich die Erfindung ab, denn in zukünftigen Fahrzeug- und Achsenkonzepten stellt zunehmend der von den Betätigungszylindern benötigte Bauraum ein Problem dar. Insbesondere der zur Realisierung der Parkbremsfunktion benötigte Federspeicher erschwert die Installation der Bremse erheblich. Insbesondere diesem Problem hilft die erfindungsgemäße Scheibenbremse ab, bei welcher die Zuspannvorrichtung neben dem Drehhebel eine vorzugsweise Selbstverstärkungseinrichtung aufweist und jedenfalls der zuspannseitige Bremsbelag sowohl in Richtung parallel zur Bremsscheibendrehachse als auch parallel zur Bremsscheibenreibfläche verschieblich ist. Vorzugsweise ist die Selbstverstärkungseinrichtung parallel zur Zuspannvorrichtung geschaltet.

Der Leistungsbedarf des Bremszylinders wird derart durch die Nutzung von Selbstverstärkungseffekten reduziert, woraus auch eine Bauraumverkleinerung resultiert. Dennoch bleibt das vorteilhafte Betriebsverhalten der Bremse erhalten. Die Idee der Seibstverstärkung wird bei einer pneumatisch betätigten Scheibenbremse ergänzt, da bereits mit relativ geringen Selbstverstärkungsfaktoren eine erhebliche Reduzierung der Baugröße der Bremszylinder und Federspeicher möglich ist. Die Selbstverstärkung wird dabei durch entsprechende Dimensionierung der Keil- bzw. Rampenwinkel so gewählt, dass sich auch bei einem maximal möglichen Reibbeiwert der Bremsbeläge noch ein sicher selbsttätiges Lösen der Bremse ergibt. Anders als bei elektromotorischen Scheibenbremsen muß damit der Krafterzeuger zum Zuspannen der Bremse nicht auch zum Lösen der Bremse genutzt werden. Mit einer derartigen Auslegung ist noch ein Selbstverstärkungsfaktor von etwa 2 erzielbar.

Dies sei anhand eines Beispiels näher erläutert.

Bei einem Berechnungsreibwert von 0,375 kann der im Betrieb auftretende Reibbeiwert bei Annahme einer Streubandbreite von +/- 20 % zwischen 0,3 und 0,45 liegen. Unter Zugrundelegung dieser Reibbelageigenschaften kann ein sicheres Rückstellverhalten mit noch ausreichend hohen Rückstellkräften für schnelles selbsttätiges Lösen erzielt werden wenn der Keil- bzw. Rampenwinkel $\alpha$ so gewählt wird, dass der tan ($\alpha$) unter Berücksichtigung der mechanischen Verluste einem Betrag eta*$\mu$ = 0, 65 entspricht. ( eta = mech. Wirkungsgrad, $\mu$ = Belagreibwert).

Bei einer derartigen Auslegung wird nicht nur der Bauraum und Energiebedarf des Betriebsbremszylinders halbiert, sondern auch die benötigte Stellenergie der Parkbrems-Speicherfeder, da bei einem Abstellen des Fahrzeuges an einer Steigung infolge der wirkenden Hangabtriebskraft die Selbstverstärkung auch im Parkbremsfall wirksam wird.

Insbesondere kann bei Verzicht auf die Übertragung hoher Rückzugskräfte der Aufwand für die Lagerung reduziert werden. Es ist ein vereinfachtes Lagerungskonzept mit Halbschalen-Wälzlagern wie bei den derzeit im Serieneinsatz befindlichen Scheibenbremsen der Bauart "Knorr-Bremse SN6 oder SN7" möglich oder mit "Kugelgleitlagern" wie in der WO 2007/082658 beschrieben.

Sinnvoll erscheint die rückzugsfähige Anbindung der Druckplatte an den Betätigungsstempel. Damit wird die Kraft der inneren Rückstellfeder für das Rückstellen des Bremsbelages nach einem Bremsvorgang genutzt sowie die Vorspannung zwischen den Wälzkörpern und den Rampenflächen an den Verstärkungsstempeln aufrechterhalten. Es ist wegen der nur noch geringen erforderlichen Rückzugskräfte auch eine vereinfachte und montagegerechtere Lösung in Form eines eingeklipsten Bolzens oder Lagerkugel denkbar.

Besondere Vorteile des beschriebenen Bremsenkonzeptes sind:

- kleinere Bremszylinder und Federspeicher,
- kleinere Dimensionierung von Kompressor und anderen Luftbeschaffungskomponenten infolge des geringeren Druckluftbedarfes der Bremsanlage,
- geringerer Energiebedarf für die Luftbeschaffung der Bremsanlage,
- kein Umbruch in der Technologie der Bremsensteuerung: die Bremse verhält sich für die Bremsensteuerung wie eine normale druckluftbetätigte Bremse,
- voll redundantes Bremssystem mit Nutzung der Selbstverstärkung.

Vorteilhafte Ausgestaltungsmöglichkeiten ergeben sich durch:

- eine Bauart der Bremse mit einem mittig angeordneten, vom Bremszylinder mittels Bremshebel betätigten Betätigungsstempel und zwei parallel angeordneten Verstärkungsstempeln,
- eine Führungsplatte, welche die Umfangskraft von den Verstärkungsstempeln direkt auf das achsfeste Bauteil der Bremse überträgt,
- eine überkreuzend schwenkbare Lagerung des Betätigungsstempels,
- eine Wahl der Selbstverstärkung so, dass die am Keilsystem wirksam werdende tangentiale Rückstellkraft bei dem maximal möglichen Reibwert des Bremsbelages und unter Berücksichtigung der mechanischen Verluste noch so hoch ist, dass sich auch im Falle von ABS-Regelvorgängen noch ein ausreichend schnelles, selbsttätiges Lösen ergibt. Zur Bestimmung des maximal möglichen Belagreibwertes kann erfahrungsgemäß ein Reibwertstreuband von +/- 20 % des Berechnungsreibwertes zugrunde gelegt werden.

- Die mindest erforderliche tangentiale Rückstellkraft wurde mit einem Betrag von ca. 10 % der Gesamt-Spannkraft der Bremse ermittelt. Der Betrag ist von der Höhe der Reibwiderstände und von den bewegten Massen abhängig. Dieser Betrag erscheint zunächst niedrig, da bei einer normalen druckluftbetätigten Scheibenbremse ohne Selbstverstärkung die gesamte Spannkraft der Bremse zum schnellen Lösen zur Verfügung steht. Eine Analyse des Lösevorganges zeigt jedoch, dass die Lösezeit wesentlich durch den Strömungswiderstand beim Entlüften des Bremszylinders bestimmt wird. Da bei der selbstverstärkenden Bremse auch ein erheblich geringeres Luftvolumen abzublasen ist wird der Einfluss der geringeren Rückstellkraft kompensiert.

- Das Übersetzungsverhältnis des Bremshebels wird unter Berücksichtigung des aus der Selbstverstärkung resultierenden Spannkraftanteils von ca. 50% sowie der möglichen maximalen Wirkflächen des Brems- bzw. Kombizylinders so gewählt, dass der Hub und damit die erforderliche Baulänge der Zylinder minimiert wird.

Es sind alternativ auch Applikationen denkbar, bei denen der Durchmesser des Zylinders minimiert werden soll. Dann wird die Übersetzung in entsprechend anderer Weise minimiert.

Als vorteilhaft zu erwähnen ist noch das rückzugsfähig eingeklipste Gelenklager der Druckplatte.

Für die pneumatisch betätigte Scheibenbremse mit Selbstverstärkung ist auch keine aufwendige Regelung notwendig, um an einem Fahrzeug trotz der bei den vorgeschlagenen Selbstverstärkungsgraden vorgeschlagenen Reibwertschwankungen zufrieden stellendes Bremsverhalten zu erreichen.

Bei dem Selbsverstärkungsgrad bleibt das Bremsverhalten selbst eines schweren Nutzfahrzeugs überraschend auch ohne elektronische Regelung oder allein auf der Basis von an modernen Fahrzeugen mit pneumatisch betätigten Bremsen in der Regel heute vorhandenen Steuerungs- oder Regelungssystem wie einem ABS-System oder EBS-System möglich, und zwar auch ohne eine Möglichkeit zur Unterstützung des Lösens der Scheibenbremse durch Einsatz des Aktuators zum Zuspannen der Bremse.

Besonders vorteilhaft ist es dabei, die Hebelbetätigung mit einem Drehhebel mit einer zur Bremsscheibendrehachse orthogonalen Drehachse auch zum Zuspannen einer selbstverstärkenden Scheibenbremse mit einem pneumatischen Aktuator zu nutzen.

Dabei sind der Betätigungsstößel am Bremsdrehhebel und an der Druckplatte oder dem zuspannseitigen Bremsbelag mit - vorzugsweise überkreuzender - Drehachse schwenkbar gelagert, was auf einfache Weise das Konzept der Drehhebelbetätigung auch für selbstverstärkende Scheibenbremsen nutzbar macht.

Der Begriff des Betätigungsstößels bzw. Betätigungsstempels ist nicht zu eng zu fassen. Er umschließt insbesondere auch längeveränderliche Baueinheiten aus mehreren Elementen.

Besonders bevorzugt ist der Betätigungsstößel an der Exzenterdrehachse des Bremsdrehhebels und an der Druckplatte oder dem zuspannseitigen Bremsbelag derart gelagert und befestigt, dass er Schwenkbewegungen des Bremsdrehhebels und Umfangsschiebebewegungen des Bremsbelages und ggf. der Druckplatte durch Schwenken in den beiden zueinander senkrecht stehenden Schwenkrichtungen ausgleichen kann.

Damit wird bei geringem benötigtem Bauraum sowohl die zur Erzielung des Selbstverstärkungseffektes notwendige Umfangsbewegung der Druckplatte ermöglicht als auch ein Ausgleich der Kippbewegung des Betätigungsstößels aufgrund der ausschließlich drehbeweglichen Führung im Exzenter des Bremsdrehhebels.

Vorzugsweise ist die Betätigungsstößel-Einheit an beiden Montageenden mit Schwenklagern, z.B. Gleitkalottenlagern, ausgerüstet.

Ergänzend wird nach einer besonders vorteilhaften Ausgestaltung auch die Einleitung der Nachstelldrehbewegung in den in zwei Richtungen schwenkbaren Betätigungsstößel ermöglicht.

Dazu ist der Betätigungsstößel zunächst als axial längenveränderliche, insbesondere teleskopierbare Baueinheit ausgebildet, welche eine Längenveränderung des Bremsstempels zum Ausgleich von Beklag- und/oder Scheibenverschleiß ermöglicht.

Vorzugsweise besteht die Betätigungsstößel-Baueinheit aus Betätigungsstößel und Gewindespindel und ist über ein Synchronisationsgetriebe mit einer Nachstelleinrichtung gekoppelt.

Besonders bevorzugt ist die Betätigungsstößel-Einheit aus dem Betätigungsstößel, der Gewindespindel zur Übertragung der Nachstelldrehbewegung baulich einfach mit einem Zahnrad verbunden.

Dabei ist die Gestaltung des Zahnrades vorzugsweise so, dass bei nicht betätigter Bremse, also in Ruheposition des Betätigungsstößels, ein enges Zahnspiel zu den weiteren gekoppelten Zahnrädern besteht.

Bei betätigter Bremse werden jedoch die Zahnräder durch die Zustellbewegung des Betätigungsstößels so weit außer Eingriff gebracht, dass die dann erfolgende Schwenkbewegung des Betätigungsstößels ermöglicht wird.

Für die Gelenklager an der Bremsdrehhebel - Exzenterdrehachse sowie an der Druckplattenanbindung des Betätigungsstößels sind auch alternative Ausführungsformen möglich.

Vorzugsweise ist ein stationäres Bauteil der Selbstverstärkungseinrichtung, welches mit der Nachstellvorrichtung verbunden ist, derart mit geringem Spiel parallel zur Bremsscheibendrehachse zwischen Führungsflächen des achsfesten Bauteils der Bremse aufgenommen, dass bei Bremsungen die auftretenden Umfangskräfte unmittelbar von diesem stationären Bauteil der Selbstverstärkungseinrichtung auf das achsfeste Bauteil der Bremse abgestützt werden.

Nachfolgend wird die Erfindung anhand eines Ausführungsbeispiel näher beschrieben. Es zeigen:

Fig. 1 eine erste Schnittansicht einer Schiebesattel-Scheibenbremse mit einem Bremszylindergehäuse;

Fig. 2 die Scheibenbremse aus Fig. 1 mit einer schematisch vergleichenden Darstellung von zwei verschieden großen an die Scheibenbremse angesetzten Bremszylindern;

Fig. 3 eine zu Fig. 1 senkrechte weitere Schnittansicht durch die Scheibenbremse aus Fig. 1;

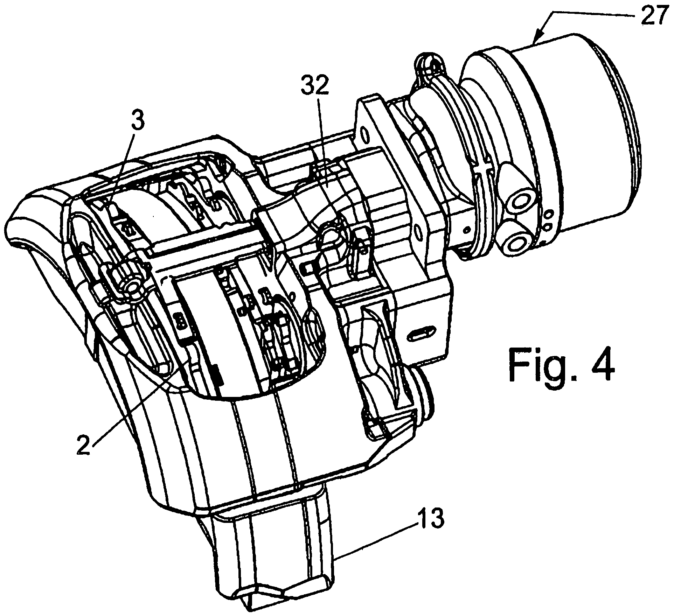

Fig. 4 eine perspektivische Darstellung der Scheibenbremse aus Fig. 1; und

Fig. 5 eine schematische Skizze eines Bremsenabschnittes zur Veranschaulichung von Überlegungen zur Auslegung von Bremsen nach Art der Fig. 1 bis 4.

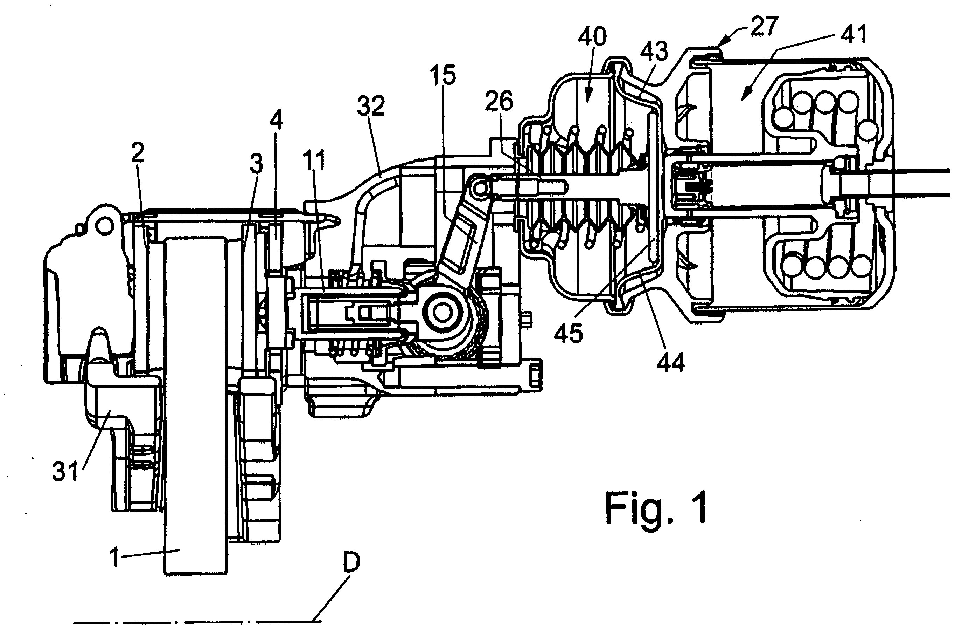

Fig. 1 zeigt eine (Teilbelag-) Schiebesattel-Scheibenbremse, mit beidseits einer Bremsscheibe 1 angeordneten Bremsbelägen 2 und 3.

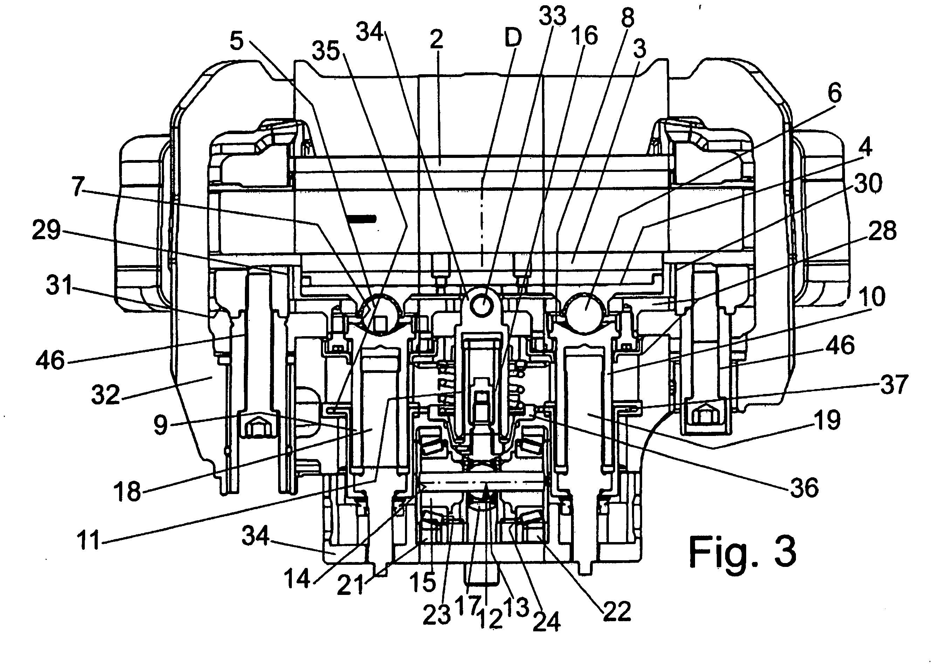

Die Schiebesattel-Scheibenbremse weist einen die Bremsscheibe 1 im Umfangsrandbereich übergreifenden ein- oder hier mehrteiligen Bremssattel 32 (hier mit einem Bremssatteldeckel) auf, welcher eine Zuspannvorrichtung aufnimmt. Der Bremssattel 32 ist mittels einer Sattelschiebeführung 46 an einem achsfesten Bremsträger 31 verschieblich geführt (Fig. 3).

Ein Bremszylinder 27 als Krafterzeuger, der an den Bremssattel angesetzt oder angeformt ist (Fig. 1), wirkt über eine Kolbenstange 26 auf einen vorzugsweise exzentrisch im Bremssattel 20 gelagerten Bremsdrehhebel 15, der infolge einer Betätigung durch den Bremszylinder um eine senkrecht zur schematisch angedeuteten Bremsscheibendrehachse D ausgerichtete Drehachse verschwenkbar ist.

Der Bremsdrehhebel 15 wirkt wiederum über wenigstens einen Bremsstempel 11 direkt oder über eine Druckplatte auf einen zuspannseitigen Bremsbelag 3.

Dabei sind der Bremsstempel 11 und der Bremsdrehhebel 15 sowie der Bremsstempel 11 und die Druckplatte 4 gelenkig miteinander derart verbunden, dass der Bremsstempel 11 beim Zuspannen der Scheibenbremse ganz oder zumindest im wesentlichen einer Bewegung des zuspannseitigen Bremsbelages 3 in Umfangsrichtung der Bremsscheibe 1 folgen kann.

Die Zuspannvorrichtung ist dabei derart ausgelegt, dass auf den Bremsbelag 3 Druckkräfte einwirken können.

Der betätigungsseitige Bremsbelag 3 ist in der Druckplatte 4 aufgenommen, die auch einteilig mit dem Bremszylinder ausgebildet sein kann.

Die Druckplatte 4 ist parallel zur Bremsscheibenreibfläche verschieblich und steht über in ihr gelagerten Rollkörper, hier Kugeln 5 und 6, mit keilartigen Rampen 7 und 8 von axial längenveränderlichen Druckstempeln bzw. Nachstellkolben 9 und 10 in Wirkverbindung, die in einem spitzen Winkel von mehr als 0 und weniger als 90° zur Bremsscheibenreibfläche ausgerichtet sind. Die Rampen 7, 8 könnten auch oder ergänzend auch in der Druckplatte 4 ausgebildet sein. Die Kugeln (oder sonstige Rollkörper) wären in diesem Fall in kalottenartigen Ausnehmungen der Druckstempel geführt, die dennoch Teil der Selbstverstärkungseinrichtung im Sinne des Anspruchs 1 wären.

An der Druckplatte 4 ist - wie bereits erwähnt - der Betätigungsstößel 11 zur Übertragung der in Richtung der Bremsscheibe wirkenden Druck -und Zugkräften angelenkt.

Diese Anlenkung erfolgt hier mittels eines Bolzens 33 und mit einem Gabelkopf 34.

Diese gelenkige Verbindung erlaubt bei einer Umfangsverschiebung der Druckplatte 4 eine Schwenkbewegung eines Betätigungsstößels 11 um den Kugelmittelpunkt 12 (der auf der Exzenterdrehachse liegt) eines Kalottenlagers 13.

Das Kalottenlager 13 ist auf der Exzenterachse 14 des Bremsdrehhebels 15 zur Übertragung der Betätigungskräfte auf den Betätigungsstößel 11 aufgenommen.

Der Betätigungsstößel 11 ist mit einem Gewindestößel 16 verschraubt, wobei der Gewindestößel 16 wiederum fest mit einem Gelenklagergehäuse 17 verbunden ist.

Der Betätigungsstößel 11 bildet mit dem Gewindestößel 16 einen zum Zwecke der Verschleiß - Nachstellung längenveränderlichen Stößel bzw. Nachstellkolben.

In gleicher Weise sind die beiden Druckstempel 9 und 10 mit den Gewindespindeln 18 und 19, welche die Abstützkraft der Druckstempel 9/10 auf das Bremsengehäuse bzw. den Bremssattel 32 übertragen, verschraubt.

Die Gewindespindeln 18/19 sind mit dem Gewindestößel 16 durch ein Synchronisationsgetriebe verbunden. Hierdurch wird erreicht, dass die Antriebs - Drehbewegung des Nachstellerantriebs nur synchron auf die beiden Druckstempel 9 und 10 sowie den Betätigungsstößel 11 einwirkt.

Der Bremsdrehhebel 15 ist in den zwei Lagerböcken 21/22 mittels zweier Wälzlager 23/24 reibungsarm gelagert.

Die Lagerböcke 21/22 sind mit dem Bremsengehäuse/-sattel 32 fest verbunden.

An den Hebelarm des Bremsdrehhebels 15 ist die Kolbenstange 26 angesetzt oder angelenkt, die zur Übertragung von Druck - Betätigungskräfte dient.

Die Druckstempel 9/10 sind an ihrem der Bremsscheibe 1 zugewandten Ende in einer Führungsplatte 28 derart aufgenommen bzw. ausgestaltet, dass auf die Rampen 7/8 parallel zur Bremsscheibenreibfläche wirkende Abstützkräfte in die Führungsplatte 28 eingeleitet und von dieser, je nach Drehrichtung der Bremsscheibe, an den Führungsflächen 29 oder 30 auf den Bremsträger 31 abgeleitet werden.

Die Führung der Druckstempel 9/10 und des Betätigungsstößels 11 erfolgt an deren zu Bremsscheibe 1 gewandten Ende ausschließlich über die Führungsplatte 28 und den Bremsträger 31.

Der Bremssattel 32 und das Nachstelleinrichtungsgetriebe 35/36/37 sowie die Sattelschiebeführung sind von den Umfangskräfte entlastet.

Dabei sind die Bremsstempel 9,10 vorzugsweise einfach direkt an der Führungsplatte 28 verschraubt oder verpresst.

Nachfolgend sei beispielhaft eine Bremsung mit dieser Scheibenbremse beschrieben:

Beim Erkennen eines Bremswunsches über die Betätigung des Bremspedals und damit des mit dem Bremspedal verbundenen Brems - Sollwertgebers wird der Bremszylinder 27 mit Druckluft beaufschlagt, so dass sich die Kolbenstange 26 bewegt.

Der Bremsdrehhebel 15 wird dabei in seinen Wälzlagern 23/24 verschwenkt und bewegt damit auch seine Exzenterwelle 14 und damit das Kalottenlager 13 entsprechend der Hebelübersetzung in Richtung der Bremsscheibe. Die Bewegung des Kalottenlagers wird über den Betätigungsstößel bzw. über die Bauteilkette 12 => 13 => 17 => 16 => 11 =>33 => 34 auf die Druckplatte 4 übertragen.

Die Druckplatte 4 wird dabei zunächst zur überwindung des Lüftspieles mit dem Bremsbelag 3 rechtwinklig zu deren Reibfläche auf die Bremsscheibe 1 zu bewegt. Bei Anlegen des Bremsbelages 3 an die Reibfläche der Bremsscheibe 1 werden der Bremsbelag 3 und die damit verbundene Druckplatte 4 durch die entstehende Reibkraft von der Bremsscheibe 1 in deren Drehrichtung mitbewegt.

Die Kugeln 5/6 werden an den Rampen 7/8 entlang geführt und bewirken dabei auf die Druckplatte 4 zusätzlich zu deren Umfangsbewegung als Selbstverstärkungseinrichtung eine verstärkte Bewegung auf die Bremsscheibe zu.

Die vom Betätigungsstößel 11 eingeleitete Anlegekraft
wird dabei entsprechend der erhöhten Aufspreizung des Bremssattels 32 verstärkt. Infolge der Umfangsverschiebung der Druckplatte 4 führt der Betätigungsstößel 11 eine Schwenkbewegung um das Kalottenlager 13 und den Bolzen 33 aus.

Der reaktionsseitige Bremsbelag 2 wird wie bei Schiebesattelbremsen üblich infolge einer Verschiebung des Bremssattels an die Bremsscheibe 3 gelegt. Hier muss keine Selbstverstärkungseinrichtung vorgesehen sein.

Der Bremszylinder 27 ist hier als Kombizylinder ausgebildet, der einen Betriebsbremsabschnitt 40 und einen Feststellbremsabschnitt 41 aufweist.

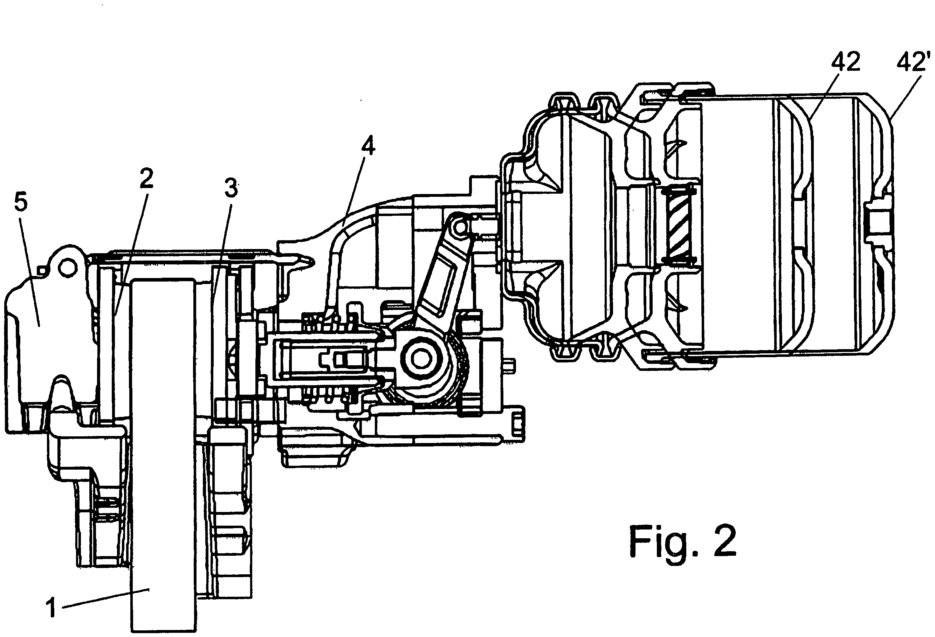

Fig. 2 verdeutlicht anhand eines Vergleichs zweier Bremszylindergehäuse 42 und 42', das es die Bauart der Zuspannvorrichtung 10 der Scheibenbremse in selbstverstärkender Form ermöglicht, einen kleineren Bremszylinder 42 einzusetzen, als dies ohne die selbstverstärkende Auslegung (siehe den Bremszylinder 42') möglich wäre.

Der Betriebsbremszylinderabschnitt 40 ist als Membranzylinder ausgelegt, der eine mit Druckluft beaufschlagbaren Raum 43 aufweist, wobei die Druckluftbeaufschlagung bewirkt, dass über eine Membran 44 und einen Teller 45 die Kolbenstange 26 bewegt wird, die auf ein Ende des exzentrisch gelagerten Drehhebels 15 der Zuspannvorrichtung einwirkt.

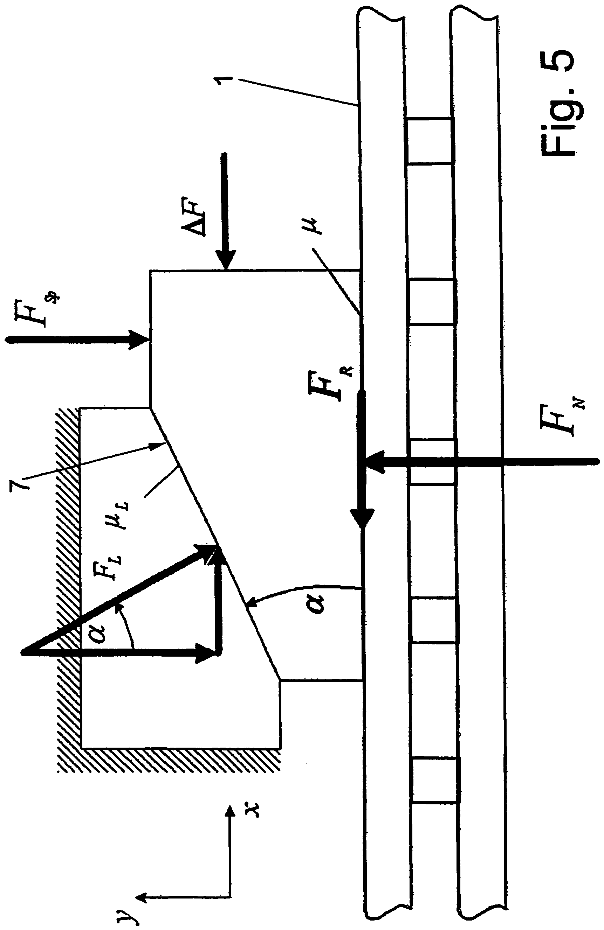

Nachfolgend sei ergänzend anhand der Fig. 5 die Auslegung der selbstverstärkenden pneumatisch betätigten Scheibenbremse näher erläutert.

Aus Gleichgewichtsbedingungen in x- und y-Richtung folgt:

$$\Sigma F_x = 0 = -F_R + F_L \cdot \sin(\alpha \pm \gamma) - \Delta F \text{ (I)}$$

$$\Sigma F_y = 0 = F_N - F_L \cdot \cos(\alpha \pm \gamma) - F_{Sp} \text{ (II)}$$

Dabei ist der Winkel $\gamma$ der Reibwinkel in der Keilrampe (hier als bei 7 bzw. 8) und lässt sich durch die Beziehung $\gamma = \arctan(\mu_L)$. Je nach Bewegungsrichtung des Bremsbelages hat dieser Reibwinkel einen unterschiedlichen Einfluss auf den effektiven Keilwinkel. Bei Bewegung des Bremsbelages in Zuspannrichtung wirkt die Reibung in der Keilrampe dieser Bewegung entgegen. Somit wird der effektive Keilwinkel um den Betrag des Reibwinkels y erhöht (Rückstellvermögen des Keils wird größer). In Löserichtung ist dieser Zusammenhang genau umgekehrt, d.h. der effektive Keilwinkel wird um den Betrag des Reibwinkels verkleinert (Rückstellvermögendes Keils wird kleiner).

Für die Zuspannrichtung gilt somit

$$\alpha_{\mathit{eff}} = \alpha + \gamma$$

und für die Löserichtung

$$\alpha_{\mathit{eff}} = \alpha - \gamma \,.$$

Aus Gleichgewichtsbeziehung (I) folgt

$$F_L = \frac{1}{\sin(\alpha \pm \gamma)} \cdot (\mu \cdot F_N + \Delta F),$$

eingesetzt in (II) ergibt:

$$\frac{\Delta F}{F_N} = \tan(\alpha \pm \gamma) - \mu - \frac{F_{SP}}{F_N} \cdot \tan(\alpha \pm \gamma)\,(\mathrm{III})\,.$$

In normalen Bremsbetrieb ist das Verhältnis $\frac{\Delta F}{F_N} = 0$, da der Aktuator (hier nicht dargestellt) die Kraftdifferenz von

$$F_N \cdot (\tan(\alpha \pm \gamma) - \mu)\ \text{vollständig ausgleicht.}$$

Der Aktuator kann so ausgebildet sein, dass dieser sowohl in tangentialer (x) als auch in normaler Richtung (y) Kräfte übertragen kann.
In einer ABS-Bremsung kommt es darauf an, die Zuspannkraft ($F_N$) so schnell wie möglich abzubauen, um ein Blockieren des Rades zu verhindern. Bei reiner Betrachtung des Bremsbelags, kann die Beziehung (III) folgendermaßen umgeschrieben werden:

$$\frac{\Delta F}{F_N} = \tan(\alpha - \gamma) - \mu\,(\mathrm{IV})\,.$$

Die Aktuatorkraft wird zunächst vernachlässigt (d.h. $F_{SP}$=0).
Die resultierende Rückstellkraft aus dem Keil muss in der Lage sein, den Belag als auch die verbleibende Aktuatorkraft (Entlüftungswiderstand des Zylinders, Wirkungsgrad der Aktuatormechanik und Massenträgheit) schnell genug in Lösestellung zu bringen bzw. zu überwinden. Aus der bisherigen Erfahrung ergibt sich folgender Zusammenhang:

$$\boxed{\frac{\Delta F}{F_N} \geq 0{,}1}$$

**Bezugzeichen**

| | |
|---|---|
| Bremsscheibe | 1 |
| Bremsbeläge | 2, 3 |
| Druckplatte | 4 |
| Kugeln | 5 und 6 |
| Rampen | 7 und 8 |
| Druckstempel | 9 und 10 |
| Betätigungsstößel | 11 |
| Kugelmittelpunkt | 12 |
| Kalottenlager | 13 |
| Exzenterachse | 14 |
| Bremsdrehhebel | 15 |
| Gewindestößel | 16 |
| Gelenklagergehäuse | 17 |
| Gewindespindeln | 18 und 19 |
| Lagerböcke | 21/22 |
| Wälzlager | 23/24 |
| Kolbenstange | 26 |
| Bremszylinder | 27 |
| Führungsplatte | 28 |
| Führungsflächen | 29 oder 30 |
| Bremsträger | 31 |
| Bremssattel | 32 |
| Bolzen | 33 |
| Gabelkopf | 34 |
| Nachstellgetriebe | 35/36/37 |
| Betriebsbremsabschnitt | 40 |
| Feststellbremsabschnitt | 41 |
| Bremszylindergehäuse | 42 und 42' |
| Raum | 43 |
| Membran | 44 |
| Teller | 45 |
| Sattelschiebeführung | 46 |

**Patentansprüche**

1.  Scheibenbremse, mit

    a. einem verschieblichen Bremssattel (32), der mittels einer Sattelschiebeführung (46) an einem achsfesten Bremsträger (31) verschieblich geführt ist und mit wenigstens einem zuspannseitigen und einem reaktionsseitigen Bremsbelag (2, 3) und einer Bremsscheibe (1),
    b. einem wenigstens druckluftbeaufschlagbaren Bremszylinder (27) als Bremskrafterzeuger, der auf eine Zuspannvorrichtung zum Zuspannen des Bremsbelages wirkt, die einen Bremsdrehhebel (15) aufweist,
    c. wobei der Bremsdrehhebel (15) direkt oder über ein zwischengeschaltetes Bauelement auf wenigstens einen ein- oder mehrteiligen Betätigungsstößel (11) einwirkt, welcher direkt oder über eine Druckplatte (4) auf den zuspannseitigen Bremsbelag einwirkt,
    d. wobei zumindest der zuspannseitige Bremsbelag sowohl in Richtung parallel zur Bremsscheibendrehachse als auch parallel zur Bremsscheibenreibfiläche beweglich ist,

e. wobei eine Selbstverstärkungseinrichtung vorgesehen ist,

f. wobei die Selbstverstärkungseinrichtung parallel zu dem Betätigungsstößel geschaltet ist, und

g. wobei der Betätigungsstößel (11) am Bremsdrehhebel (15) und an der Druckplatte (4) oder dem zuspannseitigen Bremsbelag (3) schwenkbar gelagert ist,

**dadurch gekennzeichnet, dass**

h. die Scheibenbremse pneumatisch betätigt ist und

i. das die Selbstverstärkungseinrichtung einen Selbstverstärkungsfaktor aufweist, der derart gewählt ist, dass sich die Bremse nach Bremsungen auch bei einem maximal möglichen Reibbeiwert nach Bremsungen noch selbsttätig löst, und

j. dass der Selbstverstärkungsfaktor kleiner oder gleich 2,2 ist.

2. Pneumatisch betätigte Scheibenbremse nach Anspruch 1, **dadurch gekennzeichnet, dass** der Selbstverstärkungsfaktor kleiner oder gleich 2,0 ist.

3. Pneumatisch betätigte Scheibenbremse nach einem der vorstehenden Ansprüche, **gekennzeichnet durch** wenigstens eine Nachstellvorrichtung (18, 9; 19, 10) zum Nachstellen von Belag- und/oder Scheibenverschleiß.

4. Pneumatisch betätigte Scheibenbremse nach einem der vorstehenden Ansprüche, **dadurch gekennzeichnet, dass** der Betätigungsstößel (11) am Bremsdrehhebel (15) und an der Druckplatte (4) oder dem zuspannseitigen Bremsbelag (3) mit überkreuzender Drehachse schwenkbar gelagert ist.

5. Pneumatisch betätigte Scheibenbremse nach einem der vorstehenden Ansprüche, **dadurch gekennzeichnet, dass** der Betätigungsstößel (11) an der Exzenterdrehachse (E) des Bremsdrehhebels (15) und an der Druckplatte (4) oder dem zuspannseitigen Bremsbelag (3) derart gelagert und befestigt ist, dass er Schwenkbewegungen des Bremsdrehhebels (15) und Umfangsschiebebewegungen des Bremsbelages (3) und ggf, der Druckplatte (4) durch Schwenken in den beiden zueinander senkrecht stehenden Schwenkrichtungen ausgleichen kann.

6. Pneumatisch betätigte Scheibenbremse nach einem der vorstehenden Ansprüche, **dadurch gekennzeichnet, dass** der Betätigungsstößel (11) an seinen beiden Montageenden mit Schwenklagern, z.B. Gleitkalottenlagern, versehen ist, wobei die Kraftübertragung sowohl auf der Bremsdrehhebelseite als auch auf der Druckplattenseite über Gelenkbolzen erfolgt, wobei der Gelenkbolzen des Bremsdrehhebels zu demjenigen der Druckplatte (4) mit überkreuzender Drehachse angeordnet ist.

7. Pneumatisch betätigte Scheibenbremse nach einem der vorstehenden Ansprüche, **dadurch gekennzeichnet, dass** der Betätigungsstößel (11) als axial längenveränderliche, insbesondere teleskopierbare Betätigungsstößel-Baueinheit zum Ausgleich von Beklag- und/oder Scheibenverschleiß ausgebildet ist.

8. Pneumatisch betätigte Scheibenbremse nach Anspruch 8, **dadurch gekennzeichnet, dass** die Betätigungsstößel-Baueinheit zur Übertragung der Nachstelldrehbewegung über ein Synchronisationsgetriebe mit einer Nachstelleinrichtung (9, 18 und 10, 19) gekoppelt ist.

9. Pneumatisch betätigte Scheibenbremse nach einem der Ansprüche 5 bis 8, **dadurch gekennzeichnet, dass** das wenigstens eine Drehlager an der Bremsdrehhebel-Exzenterachse (E) als Tonnenrollen-Lager ausgestaltet ist.

**Claims**

1. Disc brake, comprising

a. a displaceable brake calliper (32) displaceably guided on a backing plate (31) mounted on the axle by means a sliding calliper guide (46), at least one application-side brake pad and one reaction-side brake pad (2, 3) and a brake disc (1),

b. an at least pneumatically actuated brake cylinder (27) acting as brake force generator, which acts on a brake application device comprising a brake rotary lever (15) for the application of the brake pad,

c. wherein the brake rotary lever (15) acts either directly or via a component inserted in between on at least one single-part or multipart actuation tappet (11), which acts directly or via a pressure plate (4) on the application-side brake pad,

d. wherein at least the application-side brake pad is movable both in a direction parallel to the axis of rotation of the brake disc and parallel to the brake disc friction surface,

e. wherein a self-energising device is provided,

f. wherein the self-energising device is connected in parallel to the actuation tappet, and

g. wherein the actuation tappet (11) is pivotably mounted on the brake rotary lever (15) and on the pressure plate (4) or on the application-side brake pad (3),

**characterised in that**

h. the disc brake is actuated pneumatically, and

i. **in that** the self-energising device has a self-energising factor which is selected such that the brake still releases automatically after braking, even at a maximum possible coefficient of friction, and

j. **in that** the self-energising factor is less than or equal to 2.2.

2. Pneumatically actuated disc brake according to claim 1, **characterised in that** the self-energising factor is less than or equal to 2.0.

3. Pneumatically actuated disc brake according to any of the preceding claims, **characterised by** at least one adjusting device (18, 9; 19, 10) for the adjustment of pad and/or disc wear.

4. Pneumatically actuated disc brake according to any of the preceding claims, **characterised in that** the actuation tappet (11) is pivotably mounted on the brake rotary lever (15) and on the pressure plate (4) or the application-side brake pad (3) with the axis of rotation crossing.

5. Pneumatically actuated disc brake according to any of the preceding claims, **characterised in that** the actuation tappet (11) is mounted on and attached to the eccentric axis of rotation (E) of the brake rotary lever (15) and to the pressure plate (4) or to the application-side brake pad (3) in such a way that swivel movements of the brake rotary lever (15) and circumferential slipping movements of the brake pad (3) and possibly the pressure plate (4) can be compensated for by swivelling in both swivelling directions perpendicular to one another.

6. Pneumatically actuated disc brake according to any of the preceding claims, **characterised in that** the actuation tappet (11) is provided with swivel bearings, for example sliding spherical cap bearings, at both of its fitting ends, force being transmitted via link pins both on the brake rotary lever side and on the pressure plate side, the link pin of the brake rotary lever being arranged with the axis of rotation crossing relative to that of the pressure plate (4).

7. Pneumatically actuated disc brake according to any of the preceding claims, **characterised in that** the actuation tappet (11) is embodied as an actuation tappet unit of axially variable, especially telescopic, length to compensate for pad and/or disc wear.

8. Pneumatically actuated disc brake according to claim 7, **characterised in that** the actuation tappet unit is coupled via a synchronisation mechanism to an adjusting device (9, 18 and 10, 19) for transmitting the adjusting rotary movement.

9. Pneumatically actuated disc brake according to any of claims 5 to 8, **characterised in that** the at least one pivot bearing is formed on the brake rotary lever eccentric axis (E) as a spherical roller bearing.

**Revendications**

1. Frein à disque comprenant

a. un étrier déplaçable (32), qui est guidé moyennant un guide poussant de l'étrier (46) de façon à se déplacer à une flasque de frein (31) solide de l'essieu, et à au moins une garniture de frein (2, 3) du côté d'application et du côté de réaction, et à un disque de frein (1),

b. un cylindre de frein (27) apte à être soumis à au moins de l'air comprimé, en tant que générateur de l'effort de freinage, qui agit sur un dispositif d'application à appliquer ladite garniture de frein, qui comprend un levier rotatif de frein (15),

c. dans lequel ledit levier rotatif de frein (15) agit directement ou via un composant y interposé sur au moins un poussoir de commande (11) intégral ou à plusieurs parties, qui agit directement ou via une plaque de serrage (4) sur ladite garniture de frein du côté d'application,

d. dans lequel au moins ladite garniture de frein du côté d'application est mobile en un sens parallèle à l'axe de rotation du disque de frein et aussi en un sens parallèle à l'aire de frottement du disque de frein,

e. à un dispositif auto renforçateur étant disposé,

f. dans lequel ledit dispositif auto renforçateur est relié en parallèle audit poussoir de commande, et

g. dans lequel ledit poussoir de commande (11) est logé de façon pivotable audit levier rotatif de frein (15) et à ladite plaque de serrage (4) ou à ladite garniture de frein (3) du côté d'application,

**caractérisé en ce que**

h. le frein à disque est actionné à un mode pneumatique, et

i. **en ce que** ledit dispositif auto renforçateur présente un facteur de renforcement, qui est choisi de telle manière, que le frein se desserre encore de manière automatique après des opérations de freinage même à un coefficient de frottement maximal possible après des opérations de freinage, et

j. **en ce que** ledit facteur d'auto renforcement est plus petit que ou égal à 2,2.

2. Frein à disque à commande pneumatique selon la revendication 1, **caractérisé en ce que** ledit facteur d'auto renforcement est plus petit que ou égal à 2,0.

3. Frein à disque à commande pneumatique selon une quelconque des revendications précédentes, **caractérisé par** au moins un dispositif de rattrapage (18, 9; 10, 10) à rattraper l'usure à la garniture et/ou au disque.

4. Frein à disque à commande pneumatique selon une quelconque des revendications précédentes, **caractérisé en ce que** ledit poussoir de commande (11) est logé de manière pivotable audit levier rotatif de frein (15) et à ladite plaque de serrage (4) ou à ladite garniture de frein (3) du côté d'application, à un axe de rotation en croix.

5. Frein à disque à commande pneumatique selon une quelconque des revendications précédentes, **caractérisé en ce que** ledit poussoir de commande (11) est logé et fixé à l'axe de rotation excentrique (E) dudit levier rotatif de frein (15) et à ladite plaque de serrage (4) ou à ladite garniture de frein (3) du côté d'application d'une telle façon, qu'il puisse compenser des mouvements pivotants dudit levier rotatif de frein (15) et des mouvements poussant périphériques de ladite garniture de frein (3) et éventuellement de ladite plaque de serrage (4) par pivotement dans les deux directions de pivotement orthogonales l'une sur l'autre.

6. Frein à disque à commande pneumatique selon une quelconque des revendications précédentes, **caractérisé en ce que** ledit poussoir de commande (11) est muni des logements pivotants, par exemple des logements à calottes de glissement, à ses deux extrémités de montage, à la transmission de l'effort se faisant on seulement du côté dudit levier rotatif de frein mais aussi du côté de ladite plaque de serrage via des boulons d'articulation, dans lequel le boulon d'articulation dudit levier rotatif de frein est disposé à axe de rotation en crois relatif au boulon d'articulation de ladite plaque de serrage (4).

7. Frein à disque à commande pneumatique selon une quelconque des revendications précédentes, **caractérisé en ce que** ledit poussoir de commande (11) est configuré sous forme d'un module à poussoir de commande variable en longueur selon le sens axial, en particulier de façon télescopique, afin de compenser l'usure sur la garniture et/ou le disque.

8. Frein à disque à commande pneumatique selon la revendication 8, **caractérisé en ce que** ledit module à poussoir de commande est accouplé à un dispositif de rattrapage via une transmission de synchronisation pour le transfert du mouvement rotatif de rattrapage.

9. Frein à disque à commande pneumatique selon une quelconque des revendications 5 à 8, **caractérisé en ce que** ledit au moins un coussinet de pivotement est formé en tant que roulement à rouleaux formant rotule à l'axe excentrique (E) dudit levier rotatif du frein.

Fig. 1

EP 2 247 868 B1

Fig. 2

EP 2 247 868 B1

EP 2 247 868 B1

Fig. 3

14

Fig. 4

Fig. 5

EP 2 247 868 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1131531 A
- DE 10335402 A1
- DE 4032885 A1
- WO 9722814 A
- DE 102006036278 B

- DE 10156348
- DE 10139913
- DE 102005030618
- DE 102006036279
- WO 2007082658 A